# EUROPÄISCHE PATENTSCHRIFT

(11) **EP 1 754 587 B1**
(45) Veröffentlichungstag und Bekanntmachung des Hinweises auf die Patenterteilung: **29.07.2009**
(21) Anmeldenummer: 06016423.3
(22) Anmeldetag: 07.08.2006
(51) Int. Cl.: B29C 55/12, C08L 23/12, C09J 7/02

(54) **Aufreissstreifen für Verpackungen**
Tear strip for packagings
Bande d'ouverture pour emballages

(30) Priorität: 19.08.2005 DE 102005039599
(43) Veröffentlichungstag der Anmeldung: 21.02.2007
(73) Patentinhaber: Wipak Walsrode GmbH & Co. KG, 29656 Walsrode (DE)
(72) Erfinder: Koppers, Markus, Dr., 29683 Bad Fallingbostel (DE); Ambrosy, Thorsten, 29683 Bad Fallingbostel (DE); Falkner, Frank, 27374 Visselhövede (DE); Hector, Ralf, 29664 Walsrode (DE); Kühn, Klaus-Dieter, 29683 Bad Fallingbostel (DE); Brandt, Rainer, Dr., 29664 Walsrode (DE); Sperlich, Bernd, Dr., 29664 Walsrode (DE)
(74) Vertreter: Bülle, Jan

(56) Entgegenhaltungen:
- EP-A2- 0 406 642
- WO-A-00/77115
- WO-A-01/60607
- WO-A-99/29794
- CA-A1- 2 314 456
- DE-A1- 4 338 524
- DE-A1- 19 939 076
- GB-A- 2 108 008
- US-A- 3 937 762
- US-A- 4 844 962
- US-A- 5 773 142
- DATABASE CA [Online] CHEMICAL ABSTRACTS SERVICE, COLUMBUS, OHIO, US; 12. Mai 1984 (1984-05-12), OHMURA, MOTOTAKA ET AL: "Polypropylene films" XP002411724 gefunden im STN Database accession no. 1977:585739 & JP 52 058773 A (MITSUBISHI PLASTICS INDUSTRIES, LTD., JAPAN) 14. Mai 1977 (1977-05-14)

## Beschreibung

Die Erfindung betrifft einen wärmeschrumpffähigen Aufreißstreifen für Verpackungen, ein wärmeschrumpffähiges, heißsiegelbares Verpackungsmaterial umfassend diesen Aufreißstreifen und Verpackungen daraus.

Aufreißstreifen sind seit langem bekannt und dienen in verschiedenen Formen als Öffnungshilfe für Verpackungen von Verpackungsgütern, wie z.B. Zigaretten, Süßwaren, CDs, etc. Dabei sind die Verpackungsgüter üblicherweise in eine Verpackungsfolie (Einschlagfolie) eingeschlagen, an welcher ein Aufreißstreifen derart befestigt ist, dass man zum Öffnen der Verpackung an ihm zieht und damit die Einschlagfolie an der gewünschten Stelle zerstört.

Als Beispiele für übliche Trägermaterialien von Aufreißstreifen können orientiertes Polyester, Polyamid, Polypropylen, Polyethylen oder Zellglas (Cellophan) genannt werden (vgl. z.B. CA-A 2 314 456).

Der Aufreißstreifen ist üblicherweise fest mit der Einschlagfolie verbunden. Traditionell sind Aufreißstreifen im Einsatz, die mit einer Schicht aus Wachs oder *Hotmelt* überzogen sind, wodurch eine Befestigung an den Einschlagfolien möglich wird. Es sind auch Verfahren bekannt, bei denen erst in der Verpackungsmaschine Wachs oder *Hotmelt* auf den Aufreißstreifen aufgebracht wird, bevor dieser mit der Einschlagfolie verbunden und danach das Verpackungsgut verpackt wird. Auch kann der Aufreißstreifen über druckempfindliche Klebstoffe an der Einschlagfolie befestigt werden (vgl. DE-A 43 38 524 und EP-A 121 371).

An den Verbund des Aufreißstreifens mit der Einschlagfolie werden üblicherweise besondere mechanische Anforderungen gestellt, einerseits beim Verbinden von Aufreißstreifen und Einschlagfolie, andererseits beim Verpacken des Verpackungsguts.

Einerseits muss der Aufreißstreifen zum Befestigen auf der Einschlagfolie bei Raumtemperatur eine ausreichend hohe Maßhaltigkeit unter Spannung aufweisen, da beim Abwickeln des Aufreißstreifens von einer Rolle, insbesondere bei großen Lauflängen, hohe Zugkräfte auftreten.

Bei herkömmlichen Aufreißstreifen führen diese Zugkräfte jedoch zu einer reversiblen Dehnung, so dass der gedehnte Aufreißstreifen nach seiner Fixierung auf der Einschlagfolie, beispielsweise mit Hilfe druckempfindlicher Klebstoffe, durch Kontraktion wieder seine ursprüngliche Länge annimmt. Dies wird insbesondere bei herkömmlichen Aufreißstreifen beobachtet, deren Trägerfolie auf Polypropylen basiert, wobei diese Eigenschaft für biaxial orientiertes Polypropylen (BOPP) üblicherweise stärker als für monoaxial orientiertes Polypropylen (MOPP) ausgeprägt ist.

Da die Einschlagfolie im Unterschied zum gedehnten Aufreißstreifen üblicherweise nicht kontrahiert, zumindest nicht in gleichem Maß wie der Aufreißstreifen, kann es bei herkömmlichen Aufreißstreifen durch deren Kontraktion zu einer unerwünschten Bildung von Falten der Einschlagfolie im Bereich des Aufreißstreifens kommen, wodurch das äußere Erscheinungsbild der Verpackung beeinträchtigt wird.

Es ist bekannt, dieses Problem mit Hilfe von Vorrichtungen zu umgehen, bei denen der Aufreißstreifen mit kontrollierter Spannung von einer Rolle abgewickelt wird (vgl. z.B. US 4,844,962, US 5,595,803 und US 6,209,606). Dazu werden jedoch spezielle Maschinen benötigt, was vergleichsweise umständlich ist.

Andererseits muss der Aufreißstreifen nach seiner Fixierung auf der Einschlagfolie den Anforderungen genügen, welche an eine Einschlagfolie bei der Verpackung des Verpackungsguts gestellt werden. So werden die Einschlagfolien üblicherweise aus wärmeschrumpffähigen, heißsiegelbaren Materialien hergestellt, wobei die Schrumpfung dieser Einschlagfolien meist während der Heißsiegelung erfolgt. Dadurch schrumpft die Einschlagfolie im gesamten erwärmten Bereich, wird glattgezogen und schmiegt sich auf diese Weise an das Verpackungsgut an.

Um eine Faltenbildung zu Vermeiden, muss auch der Aufreißstreifen wärmeschrumpffähig sein. Die Wärmeschrumpfeigenschaften herkömmlicher Aufreißstreifen unterscheiden sich jedoch häufig von den Wärmeschrumpfeigenschaften der Einschlagfolien, wodurch der Aufreißstreifen während der Heißsiegelung nicht in gleichem Maße schrumpft wie die Einschlagfolie. Als Folge davon kann auch hier die Einschlagfolie unerwünschte Falten im Bereich des Aufreißstreifens bilden.

Die Faltenbildung kann also einerseits bei der Fixierung des Aufreißstreifens an der Einschlagfolie und andererseits bei der Wärmeschrumpfung ein Problem darstellen.

Der Erfindung liegt die Aufgabe zugrunde, Aufreißstreifen bereitzustellen, welche Vorteile gegenüber den Aufreißstreifen des Standes der Technik aufweisen. Die Aufreißstreifen sollten einerseits ausreichende mechanische Eigenschaften aufweisen, um auf herkömmlichen Vorrichtungen mit geeigneten wärmeschrumpffähigen, heißsiegelbaren Einschlagfolien verbunden werden zu können. Andererseits sollten sie Wärmeschrumpfeigenschaften aufweisen, welche denen üblicher wärmeschrumpffähiger Einschlagfolien (Verpackungsfolien) entsprechen. Darüber hinaus sollte sich der Aufreißstreifen gegenüber dem Stand der Technik zu Spulen höherer Lauflänge bei mindestens gleichem Spulendurchmesser und Spulengewicht verarbeiten lassen.

Diese Aufgabe wird durch den Gegenstand der Patentansprüche gelöst.

Es wurde überraschend gefunden, dass Aufreißstreifen bereitgestellt werden können, welche einerseits bei Raumtemperatur beim Abwickeln von Rollen mit Hilfe herkömmlicher Maschinen eine ausreichende Zugfestigkeit und einen hohen Elastizitätsmodul aufweisen, ohne in signifikantem Ausmaß reversibel gedehnt zu werden, andererseits jedoch gleichzeitig Wärmeschrumpfeigenschaften aufweisen, welche sich innerhalb weiter Grenzen an die Wärmeschrumpfeigenschaften der verwendeten Einschlagfolie anpassen lassen.

Die Erfindung betrifft einen wärmeschrumpffähigen Aufreißstreifen für Verpackungen, umfassend eine biaxial orientierte Trägerfolie, welche auf zumindest einem thermoplastischen Polyolefin oder Olefin-Copolymerisat **P₁** basiert, wobei der Elastizitätsmodul des Aufreißstreifens bei Raumtemperatur
- in Längsrichtung mindestens 2.200 MPa und
- in Querrichtung mindestens 1.400 MPa
beträgt.

Die Trägerfolie des erfindungsgemäßen Aufreißstreifens kann ein- oder mehrlagig sein. Ist die Trägerfolie mehrlagig, so sind die einzelnen Lagen vorzugsweise untereinander vemetzt. Geeignete Verfahren dazu sind dem Fachmann bekannt. Beispielsweise können die einzelnen Lagen durch Haftvermittler oder durch β-Strahlen miteinander vernetzt werden. Erfindungsgemäß sind einlagige Trägerfolien jedoch bevorzugt.

Der erfindungsgemäße Aufreißstreifen weist in Längsrichtung (MD) bei Raumtemperatur ein Elastizitätsmodul von mindestens 2.200 MPa, bevorzugt mindestens 2.400 MPa, bevorzugter mindestens 2.600 MPa, noch bevorzugter mindestens 3.000 MPa, am bevorzugtesten mindestens 3.400 MPa und insbesondere mindestens 3.800 MPa auf. Bevorzugt liegt der Elastizitätsmodul in Längsrichtung bei Raumtemperatur im Bereich von 2.200 bis 7.000 MPa, bevorzugter von 2.300 bis 6.500 MPa und insbesondere von 2.400 bis 6.200 MPa.

Der erfindungsgemäße Aufreißstreifen weist in Querrichtung (TD) bei Raumtemperatur ein Elastizitätsmodul von mindestens 1,400 MPa, bevorzugt mindestens 1.600 MPa, bevorzugter mindestens 1.800 MPa, noch bevorzugter mindestens 2.000 MPa, am bevorzugtesten mindestens 2.200 MPa und insbesondere mindestens 2.400 MPa auf. Bevorzugt liegt der Elastizitätsmodul in Querrichtung bei Raumtemperatur im Bereich von 1.400 bis 7.000 MPa, bevorzugter 2.000 bis 5.000 MPa und insbesondere 2.200 bis 4.800 MPa.

Geeignete Methoden zur Bestimmung des Elastizitätsmodul in Längs- bzw. in Querrichtung des Aufreißstreifens sind dem Fachmann bekannt. Die Bestimmung des Elastizitätsmoduls erfolgt mit dem Zugversuch angelehnt an ISO 527-2/1 B/1 (siehe unten).

Die Schichtdicke der Trägerfolie des erfindungsgemäßen Aufreißstreifens beträgt höchstens höchstens 24 µm, bevorzugter höchstens 22 µm, am bevorzugtesten höchstens 20 µm und insbesondere höchstens 19 µm. Bevorzugt liegt die Schichtdicke der Trägerfolie im Bereich von 10 bis 24 µm, bevorzugter von 12 bis 24 µm, noch bevorzugter von 15 bis 24 µm, am bevorzugtesten von 16 bis 24 µm und insbesondere von 17 bis 20 µm.

Bevorzugt weist der erfindungsgemäße Aufreißstreifen in Längsrichtung (MD) bei Raumtemperatur eine Zugfestigkeit im Bereich von 100 bis 500 MPa, bevorzugter 150 bis 400 MPa und insbesondere von 200 bis 350 MPa auf. In Querrichtung (TD) liegt die Zugfestigkeit bevorzugt im Bereich von 20 bis 300 MPa, vorzugsweise 50 bis 280 MPa. Geeignete Methoden zur Bestimmung der Zugfestigkeit sind dem Fachmann bekannt. Bevorzugt erfolgt die Bestimmung der Zugfestigkeit gemäß DIN ISO 527 Teil 1+3.

Bevorzugt weist der erfindungsgemäße Aufreißstreifen in Längsrichtung (MD) bei Raumtemperatur eine Schlagzugzähigkeit im Bereich von 3.000 bis 20.000 kJ/m², bevorzugter 5.000 bis 15.000 kJ/m² und insbesondere von 6.000 bis 10.400 kJ/m² auf. In Querrichtung (TD) liegt die Schlagzugzähigkeit bevorzugt im Bereich von 2.000 bis 20,000 kJ/m², bevorzugter 4.000 bis 15.000 kJ/m² und insbesondere 5.000 bis 10.000 kJ/m². Geeignete Methoden zur Bestimmung der Schlagzugzähigkeit sind dem Fachmann bekannt. Bevorzugt erfolgt die Bestimmung der Schlagzugzähigkeit gemäß DIN ISO 8256 oder angelehnt an DIN ISO 527 Teil 1+3.

Die hervorragenden mechanischen Eigenschaften des erfindungsgemäßen Aufreißstreifens lassen sich auf unterschiedliche Weise realisieren, welche nachfolgend näher erläutert werden.

In einer bevorzugten Ausführungsform des erfindungsgemäßen Aufreißstreifens ist die Trägerfolie simultan biaxial gereckt. Diese Ausführungsform wird im hinteren Teil der Beschreibung näher erläutert.

In einer anderen bevorzugten Ausführungsform des erfindungsgemäßen Aufreißstreifens basiert die biaxial orientierte Trägerfolie auf einer Mischung umfassend
(i) das zumindest eine thermoplastische Polyolefin oder Olefin-Copolymerisat **P₁,** wobei dieses ein gewichtsmittleres Molekulargewicht M_{w} von mindestens 50.000 g mol⁻¹, bevorzugt mindestens 60.000 g mol⁻¹, bevorzugter mindestens 70.000 g mol⁻¹, noch bevorzugter mindestens 80.000 g mol⁻¹, am bevorzugtesten mindestens 90.000 g mol⁻¹ und insbesondere mindestens 100.000 g mol⁻¹ aufweist, und
(ii) zumindest ein thermoplastisches Polyolefin oder Olefin-Copolymerisat **P₂,** welches ein gewichtsmittleres Molekulargewicht M_{w} von höchstens 25.000 g mol⁻¹, bevorzugt höchstens 10.000 g mol⁻¹, bevorzugter im Bereich von 300 bis 8.000 g mol⁻¹, noch bevorzugter von 500 bis 6.000 g mol⁻¹, am bevorzugtesten von 800 bis 4.000 g mol⁻¹ und insbesondere von 1.000 bis 2.500 g mol⁻¹ aufweist.

**P₁** und **P₂** sind durch ihr gewichtsmittleres Molekulargewicht M_{w} charakterisiert. Geeignete Verfahren zur Bestimmung des gewichtsmittleren Molekulargewichts sind dem Fachmann bekannt. Bevorzugt erfolgt die Bestimmung des gewichtsmittleren Molekulargewichts durch Gelpermeationschromatographie (GPC), vorzugsweise gemäß DIN ISO 55 672-1.

Polyolefine und Olefin-Copolymerisate im Sinne der Beschreibung sind durch Polymerisation zumindest eines Olefins erhältlich, welches zumindest eine olefinische Doppelbindung aufweist. Bevorzugte Olefine sind Ethen, Propen, But-1-en, But-2-en, 2-Methyl-propen, Butadien, Penten, Penta-1,3-dien, Hexen, Hepten, Octen, Nonen, Decen, Styrol, Methylstyrol, Vinyltoluol, Cyclopenten, Cyclohexen, Bicyclopentadien, Inden, Methylinden, Norbomen und offenkettige, monocyclische oder bicyclische Terpene. Beispiele für offenkettige Terpene sind Ocimen und Myrcen. Beispiele für monocyclische Terpene sind α-Terpinen, γ-Terpinen, Terpinolen, α-Phellandren, β-Phellandren und Limonen. Beispiele für bicyclische Terpene sind α-Pinen, β-Pinen und Camphen.

Olefin-Copolymerisate können sich von zwei oder mehreren, verschiedenen Olefinen ableiten, beispielsweise von Ethylen und Propylen. Olefin-Copolymerisate können jedoch auch neben zumindest einem Olefin zusätzlich von Comonomeren abgeleitet sein, welche neben einer olefinischen Doppelbindung weitere funktionelle Gruppen tragen. Beispielsweise ist auch ein Ethylen-Vinylacetat-Copolymerisat als "Olefin-Copolymerisat" im Sinne der Beschreibung aufzufassen.

Bevorzugte Polyolefine und Olefin-Copolymerisate sind ausgewählt aus der Gruppe bestehend aus PE (insbesondere LDPE, LLDPE, HDPE oder mPE), PP, PI, PB, PS und Norbomen, bzw. deren Copolymerisaten, z.B. Copolymerisate aus PE und Norbornen.

Mit "PE" wird Polyethylen bezeichnet. Der Schmelzflussindex MFR von Polyethylen und Ethylen-Copolymerisaten liegt bevorzugt zwischen 0,3 und 15 g/10 min (bei 190°C/2,16 kg Last, gemessen nach DIN EN ISO 1133). Im Sinne der Beschreibung umfasst die Abkürzung "(Co-)PE" sowohl Polyethylen (PE) als auch EthylenCopolymerisate (CoPE).

Mit "LDPE" wird Polyethylen niedriger Dichte bezeichnet, welches vorzugsweise eine Dichte im Bereich von 0,86-0,93 g cm⁻³ aufweist und sich durch einen vergleichsweise hohen Verzweigungsgrad der Moleküle auszeichnet. Eine Unterform von LDPE bildet lineares Polyethylen geringer Dichte (LLDPE), welches neben Ethylen als Comonomer ein oder mehrere α-Olefine mit mehr als 3 Kohlenstoffatomen enthält, z.B, But-1-en, Hex-1-en, 4-Methyl-pent-1-en und Oct-1-en. Aus der Copolymerisation der genannten Monomere ergibt sich die für LLDPE typische molekulare Struktur, die durch eine lineare Hauptkette mit daran befindlichen Seitenketten gekennzeichnet ist. Die Dichte variiert zwischen 0,86 und 0,94 g cm⁻³.

Mit "HDPE" wird Polyethylen hoher Dichte bezeichnet, welches nur eine geringe Verzweigung der Molekülkette aufweist, wobei die Dichte bevorzugt im Bereich zwischen 0,94 und 0,97 g cm⁻³ liegt.

Mit "mPE" wird ein Ethylen-Copolymerisat bezeichnet, das mittels Metallocen-Katalysatoren polymerisiert wurde. Als Comonomer wird vorzugsweise ein α-Olefin mit 4 oder mehr Kohlenstoffatomen eingesetzt. Die Dichte liegt vorzugsweise zwischen 0,88 und 0,93 g cm⁻³. Die Dispersität M_{w}/Mₙ, vorzugsweise bestimmt durch GPC, ist bevorzugt kleiner 3,5, vorzugsweise kleiner 3,0.

Mit "PP" wird Polypropylen bezeichnet, welches ataktisch, isotaktisch oder syndiotaktisch sein kann. Der Schmelzflussindex MFR von Polypropylen oder Propylen-Copolymerisaten liegt bevorzugt zwischen 0,3 und 30 g/10 min (bei 230°C/2,16 kg Last, gemessen nach DIN EN ISO 1133). Im Sinne der Beschreibung umfasst die Abkürzung "(Co-)PP" sowohl Polypropylen (PP) als auch Propylen-Copalymerisate (CoPP).

Mit "PI" wird Polyisobutylen, mit "PB" wird Polybutylen und mit "PS" wird Polystyrol bezeichnet.

Grundsätzlich ist es möglich, dass **P₁** und **P₂** aus den gleichen Monomereinheiten aufgebaut sind; beispielsweise können **P₁** und **P₂** jeweils Polypropylen sein. Da sich das gewichtsmittlere Molekulargewicht von **P₁** und **P₂** unterscheidet, würden in diesem Fall bei einer Bestimmung der Molekulargewichtsverteilung des Polypropylens zwei Maxima beobachtet, von denen das eine Maximum **P₁** und das andere **P₂** zuzuordnen ist.

In einer bevorzugten Ausführungsform des erfindungsgemäßen Aufreißstreifens sind **P₁** und **P₂** jedoch aus unterschiedlichen Monomereinheiten aufgebaut, so dass sie sich im gewichtsmittleren Molekulargewicht M_{w} und zusätzlich in ihrer chemischen Struktur unterscheiden.

Bevorzugt ist **P₁** ausgewählt aus der Gruppe bestehend aus (Co-)PE (insbesondere LDPE, LLDPE, HDPE oder mPE) und (Co-)PP. Besonders bevorzugt ist **P₁** Polypropylen (PP), insbesondere isotaktisches Polypropylen, oder ein Propylen-Copolymerisat.

In einer bevorzugten Ausführungsform des erfindungsgemäßen Aufreißstreifens liegt der Gewichtsanteil von **P₂** im Bereich von 2,5 bis 20 Gew.-%, bevorzugter, 4,0 bis 16,5 Gew.-%, noch bevorzugter 5,0 bis 15 Gew.-%, am bevorzugtesten 6,0 bis 13,5 Gew.-% und insbesondere 7,5 bis 12,5 Gew.-%, bezogen auf das Gesamtgewicht der Trägerfolie.

Bevorzugt weist **P₂** als *Masterbach* in 50 Gew.-%iger Mischung mit Polypropylen
- einen Schmelzpunkt (vorzugsweise bestimmt durch DSC, bevorzugt gemäß DIN EN ISO 11 357-1) im Bereich von 130 bis 170°C, bevorzugter 135 bis 165°C, noch bevorzugter 140 bis 160°C und am bevorzugtesten 145 bis 155°C; und/oder
- eine Dichte im Bereich von 0,940 bis 1,000 g cm⁻³, bevorzugter von 0,955 bis 0,990 g cm⁻³ und am bevorzugtesten von 0,965 bis 0,985; und/oder
- einen Schmelzflussindex MFR bei 190°C/2,16 kg (vorzugsweise bestimmt gemäß DIN EN ISO 1133) im Bereich von 7,0 bis 15 g 10 min⁻¹, bevorzugter 8,0 bis 14 g 10 min⁻¹, am bevorzugtesten 9,0 bis 13 g 10 min⁻¹ und insbesondere 10 bis 12 g 10 min⁻¹;
auf.

In einer bevorzugten Ausführungsform des erfindungsgemäßen Aufreißstreifens ist **P₂** ein Kohlenwasserstoffharz, welches bevorzugt als Gemisch mit Polypropylen eingesetzt wird (*Masterbach*).

"Kohlenwasserstoffharze" im Sinne der Beschreibung sind niedermolekulare Polymere, deren gewichtsmittleres Molekulargewicht M_{w} im allgemeinen in einem Bereich von 300 bis 8.000 g mol⁻¹, bevorzugt von 400 bis 5.000 g mol⁻¹, bevorzugter von 500 bis 3.000 g mol⁻¹ und insbesondere von 600 bis 2000 g mol⁻¹ liegt. Bei den Kohlenwasserstoffharzen handelt es sich um natürliche oder synthetische Kohlenwasserstoffharze mit einem Erweichungspunkt von vorzugsweise 60 bis 180°C, bevorzugter 80 bis 150°C, bestimmt nach ASTM E-28. Bezüglich weiterer Einzelheiten kann femer vollumfänglich auf das Buch auf R. Mildenberg, Hydrocarbon Resins, Wiley-VCH, 1997 verwiesen werden.

Unter den zahlreichen bekannten Kohlenwasserstoffharzen sind Erdölharze (Petroleumharze), Styrolharze, Cyclopentadienharze und Terpenharze bevorzugt (vgl. Ullmanns Enzyklopädie der technischen Chemie, 4. Auflage, Band 12, Seiten 525 bis 555).

Petroleumharze werden in der Regel durch Polymerisation bestimmter (*deep-composed*) Erdölfraktionen in Gegenwart eines Katalysators hergestellt. Sie enthalten gewöhnlich ein Gemisch von harzbildenden Substanzen wie Styrol, Methylstyrol, Vinyltoluol, Inden, Methylinden, Butadien, Isopren, Piperylen und Pentylen. Die Produkte der Naphta-Pyrolyse, die aus Olefinen, Dienen und Styrolderivaten bestehen, können leicht polymerisiert werden. Zwischen 155°C und 180°C entstehen Indenharze und über 180°C Rückstandspyrolyseöle, die ebenfalls polymerisieren. In der Gegenwart von Friedel-Crafts-Katalysatoren reagieren Rückstandspyrolyseöle zu viskosen dunkelgefärbten Produkten, die auch als "aromatische Petroleumharze" bezeichnet werden, Zwei Reaktionen dominieren dabei die Umsetzung der Pyrolyseöle, nämlich die Polymerisation und die Alkylierung.

Styrolharze sind vorzugsweise niedermolekulare Homopolymere von Styrol oder Copolymere von Styrol mit anderen Monomeren wie Methylstyrol, Vinyltoluol und Butadien.

Cyclopentadienharze sind vorzugsweise Cyclopentadienhomopolymere oder Cyclopentadiencopolymere, welche aus Kohlenteerdestillaten und zerlegtem Erdölgas erhalten werden können. Diese Kohlenwasserstoffharze können hergestellt werden, indem die Materialien, welche Cyclopentadien enthalten, während einer längeren Zeit bei erhöhter Temperatur gehalten werden. In Abhängigkeit von der Reaktionstemperatur können Dimere, Trimere oder Oligomere herhalten werden.

Bei den Terpenharzen handelt es sich um Polymerisate von Terpenen, welche in fast allen etherischen Ölen oder ölhaltigen Harzen von Pflanzen enthalten sind. Unter den Oberbegriff werden auch phenolmodifizierfie Terpenharze gefasst. Als spezielle Beispiele der Terpene sind Pinen, α-Pinen, Dipenten, Limonen, Myrcen, Camphen und ähnliche Terpene zu nennen.

Bei den Kohlenwasserstoffharzen im Sinne der Beschreibung kann es sich auch um die sogenannten "modifizierten Kohlenwasserstoffharze" handeln. Die,Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierung oder Teilhydrierung vorgenommen werden.

Als Kohlenwasserstoffharze eignen sich erfindungsgemäß außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb von 135°C (bei den ungesättigten Polymerisaten ist das hydrierte Produkt bevorzugt). Ganz besonders bevorzugt sind die Cyclopentadienpolymerisate mit einem Erweichungspunkt von 140°C oder darüber.

Bevorzugt ist das Kohlenwasserstoffharz ausgewählt aus der Gruppe bestehend aus Cumaron-Inden-Harz, Petroleumharz, Styrolharz, Dicyclopentadienharz und Terpenharz. Besonders bevorzugt handelt es sich bei dem Kohlenwasserstoffharz um das *Masterbach* Oppera® *PA 609N* der Fa. Exxon Mobile. Das Kohlenwasserstoffharz liegt in diesem Produkt als 50 Gew.-%iges Gemisch mit Polypropylen vor.

In einer anderen bevorzugten Ausführungsform des erfindungsgemäßen Aufreißstreifens weist dieser eine Trägerfolie auf, welche simultan biaxial verstreckt (gereckt) wurde. Dies ist eine alternative erfindungsgemäße Möglichkeit, die hervorragenden mechanischen Eigenschaften des erfindungsgemäßen Aufreißstreifens zu verwirklichen. Beide Alternativen, d.h. simultane Verstreckung und Zusatz von **P₂** zu **P₁,** können jedoch bevorzugt auch gleichzeitig verwirklicht werden, wodurch besonders vorteilhafte Aufreißstreifen erhältlich sind.

Biaxiale Verstreckungsverfahren (Reckverfahren) können nach dem Maschinenkonzept prinzipiell in Blasfolienverfahren (*Double-Bubble*-Verfahren) und Flachfolienverfahren (Mehrstufenverfahren) unterteilt werden. Eine andere gängige Unterteilung zielt auf die Art des Verstreckprozesses ab. Das Verstrecken in den beiden Reckrichtungen kann zeitlich und örtlich getrennt voneinander oder aber in einem Verfahrensschritt erfolgen. Dementsprechend spricht man von einem sequentiellen oder einem simultanen Verstreckprozess. Die simultane biaxiale Verstreckung eines Polymerfilms unterscheidet sich von der sequentiellen biaxialen Verstreckung darin, dass eine gleichzeitige Verstreckung sowohl in Längs-, als auch in Querrichtung der Trägerfolie (ohne Thermofixierung) erfolgt.

Die simultane biaxiale Verstreckung hat zur Folge, dass der Elastizitätsmodul in Längsrichtung des Aufreißstreifens größer ist, als wenn unter ansonsten gleichen Bedingungen die biaxiale Verstreckung sequentiell erfolgt. Durch entsprechende Vergleichsversuche kann somit nachträglich am fertigen Aufreißstreifen indirekt über die Bestimmung der Elastizitätsmodule (und ggf. weiterer mechanischer Eigenschaften) festgestellt werden, ob die Verstreckung simultan oder sequentiell erfolgte.

Ein weiterer Aspekt der Erfindung betrifft somit ein Verfahren zur Herstellung eines wärmeschrumpffähigen Aufreißstreifens für Verpackungen, umfassend eine biaxial orientierte Trägerfolie, welche auf zumindest einem thermoplastischen Polyolefin oder Olefin-Copolymerisat **P₁** basiert, wobei der Elastizitätsmodul des Aufreißstreifens bei Raumtemperatur
- in Längsrichtung mindestens 2.200 MPa und
- in Querrichtung mindestens 1.400 MPa beträgt,
umfassend das simultane biaxiale Verstrecken der Trägerfolie in Längs- und in Querrichtung.

In einer bevorzugten Ausführungsform des erfindungsgemäßen Verfahrens wird die Trägerfolie in Längsrichtung um ein Verhältnis von 10:1 bis 4:1, vorzugsweise 9:1 bis 5:1, und in Querrichtung um ein Verhältnis von 10:1 bis 4:1, vorzugsweise 9:1 bis 5:1, gereckt.

Die simultane Verstreckung (Reckung) des Aufreißstreifens kann auf herkömmlichen Apparaturen unter dem Fachmann bekannten Bedingungen (Temperatur, etc.) erfolgen. Das Verstrecken von Polypropylen erfolgt nicht in der Schmelze, sondern in einem teilaufgeschmolzenen Zustand unterhalb der Schmelztemperatur.

Es gibt unterschiedliche bekannte, simultane Reckverfahren für Flachfolien, bei denen die Längs- und Querreckung in einem Verarbeitungsschritt erfolgt. Als Beispiele können das Pentagraph-Verfahren, das Spindelverfahren und schließlich die LISIM®-Technologie *(Linear Motor Simultaneous Stretching Technology*) genannt werden. Das Pentagraph-Verfahren und das Spindelverfahren haben aufgrund ihres aufwendigen mechanischen Prinzips und der vergleichsweise geringen Produktionsgeschwindigkeit aus wirtschaftlicher Sicht kaum Bedeutung. Bei der LISIM®-Technologie wird analog zum Mehrstufenverfahren zunächst durch Extrusion ein *Cast*film hergestellt. Die Längs- und Querverstreckung erfolgen jedoch im Streckofen in einem Prozessschritt, indem die Kluppen, die den *Cast*film greifen, auf Schienen auseinanderlaufen und zugleich einzeln beschleunigt werden, wodurch sich die Abstände der Kluppen vergrößern. Der Querverstreckung wird damit eine Längsverstreckung überlagert. Ermöglicht wird dies durch den Antrieb der Kluppen über Linearmotoren. Da der Antrieb der einzelnen Kluppen mechanisch getrennt ist, bietet dieses System im Hinblick auf die Variation von Verstreckparametern im Gegensatz zu den beiden simultanen Recktechnologien, Pentagraphverfahren und Progressivspindelverfahren, große Flexibilität. Die mechanische Robustheit dieser Technologie ermöglicht zudem hohe Produktionsgeschwindigkeiten.

In einer bevorzugten Ausführungsform des erfindungsgemäßen Verfahrens wird der Trägerfilm zunächst aus **P₁** und **P₂,** wie vorstehend definiert, hergestellt und anschließend simultan biaxial verstreckt (gereckt).

Ein weiterer Aspekt der Erfindung betrifft einen Aufreißstreifen erhältlich durch das vorstehend beschriebene Verfahren.

In einer bevorzugten Ausführungsform des erfindungsgemäßen Aufreißstreifens ist er transparent.

Der Begriff "transparent" im Sinne der Erfindung bedeutet, dass ein Verpackungsgut durch den Aufreißstreifen hindurch mit bloßem Auge betrachtet werden kann. Die Transparenz wird bevorzugt mit Hilfe von Densitometem quantifiziert. Derartige Methoden sind dem Fachmann geläufig. Bevorzugt kann als Maß für die Transparenz die Trübung als optischer Wert gemessen werden. Die Messung der Trübung erfolgt bevorzugt nach der ASTM-Prüfnorm D 1003-61 m, Procedure A, nach Eichung des Messgerätes mit Trübungsnormalen zwischen 0,3 und 34% Trübung. Als Messinstrument eignet sich beispielsweise ein Hazemeter der Fa. Byk-Gardner mit Ulbricht-Kugel, das in einem Raumwinkel von 8° bis 160° eine integrierte Messung der diffusen Lichtdurchlässigkeiten gestattet.

Der erfindungsgemäße Aufreißstreifen weist bevorzugt eine nach dem vorstehend beschriebenen Verfahren bestimmte Trübung von weniger als 20%, bevorzugter weniger als 18%, noch bevorzugter weniger als 15%, noch bevorzugter weniger als 10%, am bevorzugtesten weniger als 8% und insbesondere weniger als 5% auf.

Der erfindungsgemäße Aufreißstreifen, z.B. dessen Trägerfolie, kann jedoch auch eingefärbt und/oder bedruckt sein. Ferner kann der erfindungsgemäße Aufreißstreifen Füllstoffe enthalten, wie z.B. CaCO₃, SiO₂, Al₂O₃, TiO₂, etc.

Es wurde überraschend gefunden, dass die Trägerfolie des erfindungsgemäßen Aufreißstreifens im Vergleich zu den Aufreißstreifen des Standes der Technik eine hohe Gleichmäßigkeit der Schichtdicke aufweist. Dies führt zu einer besseren Planlage der Folie (weniger überdehnte Bereiche) und damit einer deutlich verbesserten Verarbeitbarkeit. Das Dickenprofil einer Folie lässt sich nach DIN 53370 bestimmen. Besonders überraschend war, dass diese verbesserte Gleichmäßigkeit der Schichtdicke sogar bei geringerer Gesamtschichtdicke erreicht werden kann, insbesondere wenn **P₁** BOPP ist.

In einer bevorzugten Ausführungsform des erfindungsgemäßen Aufreißstreifens ist das Dickenprofil der Trägerfolie dadurch charakterisiert, dass die erhaltenen Messwerte in µm bei 10 Messungen im Abstand zueinander von jeweils 100 mm eine Standardabweichung von höchstens 0,7 µm, bevorzugter höchstens 0,6 µm, noch bevorzugter höchstens 0,5 µm, am bevorzugtesten höchstens 0,4 µm und insbesondere höchstens 0,3 µm ergeben.

Der erfindungsgemäße Aufreißstreifen weist bei einer Umgebungstemperatur von 130°C an Luft und einer Einwirkzeit von 5 Minuten (Messbedingungen gemäß OPMA, Vereinigung der Hersteller orientierter Polypropylenfolien) in Längs- und in Querrichtung gleich oder verschieden eine Schrumpffähigkeit von mindestens 8%, bevorzugter mindestens 10%, noch bevorzugter mindestens 12%, am bevorzugtesten mindestens 14% und insbesondere mindestens 16% auf.

Der erfindungsgemäße Aufreißstreifen umfasst er eine Haftschicht, welche auf einem Haftklebstoff basiert.

Als Haftklebstoffe können klebewirksame Substanzen eingesetzt werden, welche beispielsweise in Form wässriger Systeme, als Lösung, als Schmelze oder auch als Schmelze mit anschließender UV-Vemetzung appliziert werden können. Vorzugsweise basieren die Haftklebstoffe auf Poly(meth)acrylaten, (Meth)acrylat-copolymerisaten, Styrol-Block-Copolymeren mit Elastomerenanteil aus Polybutadien- und Polyisopren oder deren hydrierten Formen: Ethylen-Butylen bzw. Ethylen-Propylen, Polyvinylacetaten oder Gemischen daraus. Sämtliche klebewirksamen Substanzen können ggf. haftverstärkende Harze und Plastifizierungsmittel, wie z.B. weichmachende Öle, enthalten. Sie können zusätzlich durch Beimischung von Vernetzern teilvemetzt werden oder aber auch ais selbstvemetzende Systeme vorliegen. Vorzugsweise sind sie außerdem mit den üblichen Hilfsmitteln ausgerüstet. Als Ausgangsmaterialien zur Herstellung der Haftschicht können beispielsweise genannt werden: Produkt XPE 425 der Fa. AV Chemie AG; Ipacoll^{®} D 790/5, Ipacoll^{®} D 773 und Ipacoll^{®} LP 2730 der Fa. Fuller; Acronal^{®} 4D, Acronal^{®} 30D, Acronal^{®} 80D und Acronal^{®} 500D der BASF AG; Crodafix^{®} CF 27-017; Crodafix^{®} 27-062 und Crodafix^{®} EP 27-311 der Fa. Croda; Morstic^{®} 219 der Fa. Morton; Vinnapas^{®} Dispersion AF75 und Vinnapas^{®} Dispersion EAF60 der Fa. Wacker, ferner Technomelt^{®} PS 8707 und Technomelt^{®} 8783 der Fa. Henkel für Schmelz-Haftklebstoffe; Sichello^{®} J8510 und J 8715 der Fa. Henkel für lösungsmittelbasierte Haftklebstoffe; acResin^{®} A258 UV, arresin^{®} A 203 UV der Fa. Basf und Technocure^{®} PS 4110, Technocure^{®} PS 4114 der Fa. Henkel als UV vemetzende Klebstoffe.

Die Schichtdicke der Haftschicht liegt im Bereich von 3,5 bis 12 µm, vorzugsweise 5 bis 10 µm. Die Haftschicht kann als wässriges System durch ein oder mehrere Auftragswerke, denen jeweils ein separater Trockenkanal nachgeschaltet sein kann, auf die Trägerfolie aufgebracht werden.

Bei den erfindungsgemäßen Aufreißstreifen grenzt auf der einen Seite der Trägerfolie eine Haftschicht, welche auf einem Haftklebstoff basiert, und auf der anderen Seite der Trägerfolie eine Deckschicht, welche auf einem silanisierten und/oder fluoridierten Material basiert, unmittelbar an die Trägerfolie an. Haft- und Deckschicht bilden so die beiden Oberflächenschichten des erfindungsgemäßen Aufreißstreifens. Die Deckschicht erfüllt die Aufgabe, beim Aufrollen des erfindungsgemäßen Aufreißstreifens nach dessen Herstellung eine ausreichende Haftung zur Haftschicht zu gewährleisten, andererseits aber auch ein Abrollen des Aufreißstreifens während seiner Anwendung zu ermöglichen, um diesen über die Haftschicht auf einer Einschlagfolie zu fixieren (*release liner*).

Geeignete Materialien zur Herstellung der Deckschicht sind dem Fachmann bekannt. Als Ausgangsmaterialien zur Herstellung der Deckschicht können beispielsweise dienen: Silikonemulsion aus Polyhydrogenmethoxysiloxan in wässriger Zubereitung mit Polydimethyl-siloxan/Polyaminoether/Dialkylzinnverbindung in wässriger Zubereitung (Perlit® Si/SW der Fa. Bayer AG); Silikonemulsion aus Polymer SM 2013 und Katalysator SM 2014C - Kondensationssystem der Fa. GE Silicones; Sitikonemulsion aus Polymer SM 2800 und Katalysator SM 2801 - Additionssystem der Fa. GE Silicones; essigsaure Silikonemulsion aus Phoboton® SP (oder Phoboton® KS), einer kationischen Emulsion auf Polysiloxanbasis, mit Phoboton® BC, einer kationaktiven Emulsion eines Polydimethylsiloxans und eines selbstvernetzenden Polymerisats mit Zusatz einer metallorganischen Verbindung, und ggf. Phoboton-Katalysator SN der Fa. Pfersee GmbH; Rhodorsil®-Emulsion 21808 der Fa. Rhone-Poulenc; Rhodosil®-Emulsion 891 der Fa. Rhone-Poulenc; und UV-vernetzende Silicone der Fa. Goldschmidt AG bestehend aus einem Gemisch von Siliconacrylaten (z.B. RC 902, RC 715, RC 711, RC 709) mit Photoinitiator (z.B. A12, A17 oder auch polymerem Photoinitiator PC 750).

In einer bevorzugten Ausführungsform werden für die Deckschicht ein- oder mehrkomponentige wässrige kondensations- oder additionsvemetzende Trennsysteme auf Sillkonbasis eingesetzt. Sie können beispielsweise mit einem Glattwalzenwerk oder einem Tiefdruckauftragswerk aufgetragen und getrocknet bzw. gehärtet werden.

Der erfindungsgemäße Aufreißstreifens weist dieser eine Deckschicht, eine Trägerschicht und eine Haftschicht auf, wobei die Deckschicht und die Haftschicht die beiden Oberflächenschichten des Aufreißstreifens bilden,

Ein weiterer Aspekt der Erfindung betrifft die Verwendung des vorstehend beschriebenen, erfindungsgemäßen Aufreißstreifens zur Herstellung einer Verpackung.

Ein weiterer Aspekt der Erfindung betrifft ein wärmeschrumpffähiges, heißsiegelbares Verpackungsmaterial umfassend einen vorstehend beschriebenen, erfindungsgemäßen Aufreißstreifen und eine, vorzugsweise mehrschichtige, Einschlagfolie.

Bevorzugt ist der Aufreißstreifen des erfindungsgemäßen Verpackungsmaterials über einen druckempfindlichen Klebstoff mit der Einschlagfolie verbunden.

Ein weiterer Aspekt der Erfindung betrifft die Verwendung des vorstehend beschriebenen, erfindungsgemäßen Verpackungsmaterials zur Verpackung eines Verpackungsguts.

Ein weiterer Aspekt der Erfindung betrifft eine Verpackung umfassend das vorstehend beschriebene, erfindungsgemäße Verpackungsmaterial, wobei dieses wärmegeschrumpft und heißgesiegelt ist.

In einer bevorzugten Ausführungsform der erfindungsgemäßen Verpackung ist das Verpackungsmaterial einfach oder mehrfach eingeschlagen.

Die nachfolgenden Beispiele dienen der näheren Erläuterung der Erfindung, sind jedoch nicht einschränkend hinsichtlich ihres Umfangs auszulegen.

### Zugversuch angelehnt an ISO 527-2/1B/1

Zweck der Prüfung: Die Prüfung dient der Bestimmung des Kraftdehnungsverhaltens von Kunststoff-Folien unter Zugbeanspruchung.

### Begriffe und Dimensionen:

- *Zugmodul*: Die genaue Bezeichnung lautet Elastizitätsmodul (E-Modul) aus dem Zugversuch. Es ist der Quotient aus der Spannungsdifferenz und dem entsprechenden Dehnungsunterschied 0,05 und 0,25% Dehnung
- *Bruchspannung:* Spannung beim Bruch der Probe
- *Bruchdehnung*: Dehnung beim Bruch der Probe
- *Zugfestigkeit*: Maximalspannung, welche die Probe während des Zugversuchs trägt
- *Messlänge*: Einspannlänge (bei Streifenproben)
Die Kräfte werden in N, die Dehnungen in %, Spannungen, Festigkeiten und E-Modul in MPa angegeben.

### Prüfdurchführung:

Aus den zu prüfenden Mustern werden in Prüfrichtung 15 mm breite Probestreifen geschnitten. Wegen der teilweise sehr geringen Weiterreißfestigkeit der Proben ist auf einen kerbfreien Schnitt zu achten. Proben, die nicht vollständig kerbfrei geschnitten sind, werden verworfen.

### Standardbedingungen sind:

- Einspannlänge 50 mm
- Prüfgeschwindigkeit 50 mm/min
Die Prüfgeschwindigkeit zur Ermittlung des E-Moduls ist 0,5 mm/min.

An den Proben ist vor der Messung an drei Punkten die Dicke zu messen. Die Probendicke ist der Mittelwert dieser Messwerte.

### Messung:

Die Proben sind exakt gerade in die Spannköpfe der Zugprüfmaschine einzuspannen. Danach ist der Versuch zu starten. Die Messwerte werden mittels PC während der Prüfung ermittelt.

### Messgeräte:

- rechnergesteuerte Zugprüfmaschine
- Dickenmessgerät nach DIN 53 370
- Prüfstreifenschneider, 15 mm Schnittbreite

### Genauigkeit:

- Kraftmessung ± 1%
- Längenänderung ± 0,1 mm

Die Schlagzugzähigkeit wird erfindungsgemäß bevorzugt gemessen nach DIN ISO 8256. Alternativ kann eine Messung erfolgen angelehnt an die Norm DIN EN ISO 527 Teil 1 +3. Die Prüfung ist identisch mit der vorstehend beschriebenen Messung der Zugfestigkeit bei einer Verstreckungsgeschwindigkeit von 1000 mm/min.

### Beispiel B-1:

### Zugabe eines Kohlenwasserstoffharzes und sequentiell, d.h. nicht simultan, gerecktes BOPP

Als Trägerfolie diente ein 20 µm dicke BOPP-Folie mit folgendem Aufbau:
- Außenschichten:
   Propylen/Butylen/Ethylen-Terpolymer (Adsyl® 5C39F der Fa. Basell) und 0,7 %
   Polydimethylsiloxan (Viskosität: 106 cSt.).
   Dicke der Außenschichten: jeweils 1 µm
- Kernschicht:
   80% Polypropylen (Escorene® PP 4352 der Fa. ExxonMobil), 20 % Kohlenwasserstoffharz-*Masterbach* (auf Polypropylenbasis mit 50% Harzanteil) mit einem Erweichungspunkt von 140°C, wobei das Kohlenwasserstoffharz ein hydriertes, oligomeres Cyclopentadienharz ist.
   Dicke der Kernschicht: 18 µm.

### Herstellungsverfahren:

Die Folie wurde durch Schmelzcoextrusion hergestellt. Nach der Extrusion und der Verfestigung des Dickfilms auf der Gießwalze wurde der Film in Laufrichtung (längs) mit einem Verstreckungsquotienten von 5:1 bei einer Temperatur von 135°C gereckt. Das Reckverhältnis in Querrichtung betrug 9:1, die Querrecktemperatur betrug 150°C.

Die Messung des Dickenprofils der 1000 mm breiten, mit Kohlenwasserstoffharzen verstärkten Folie in 20 µm Dicke mittels mechanischer Abtastung in Abständen von 100 mm ergab folgende Werte:
19,5 µm, 19,0 µm, 19,5 µm, 19,5 µm, 19,5 µm, 19,5 µm. 20,0 µm, 20,0 µm, 20,0 µm, 19,5 µm
Mittelwert: 19,6 µm
Standardabweichung: 0,316 µm

Der Schrumpf der so hergestellten Folie beträgt (gemessen bei 130°C / 5 min)
- in Längsrichtung 14% und
- in Querrichtung 13%.

### E-Modul

- in Längsrichtung 2.500 MPa
- in Querrichtung 4.600 MPa

### Zugfestigkeit

- in Längsrichtung 220 MPa
- in Querrichtung 270 MPa

### Schlagzugzähigkeit

- in Längsrichtung 7.286 kJ/m²
- in Querrichtung 4.913 kJ/m²

Die Messung der Trübung nach ASTM D1003 mit dem Messgerät Haze gard plus Fa. Byk Gardner ergab einen Wert von 2,5 %.

Für die Deckschicht der Folie wurde jeweils eine Seite mit 0,6 g/m² folgender Siliconmischung (der Firma Goldschmidt AG) siliconisiert:

| | | | |
|---|---|---|---|
| Photoinitiator | A17 | 2 | Teile |
| Siliconkomponente | RC 715 | 55 | Teile |
| Siliconkomponente | RC 111 | 30 | Teile |
| Siliconkomponente | RC 709 | 15 | Teile |
| Summe | | 102 | Teile |

Die Rückseite der Folie wurde bei 150°C mit 7 g/m² eines Haft-Schmelzklebstoffes auf der Basis eines Styrol-Butadien-Block-Co-Polymers beschichtet. Um zu verhindern, dass die Folie bereits während des Beschichtungsvorgangs schrumpft, fand der Beschichtungsvorgang der Folie auf einer mit Wasser gekühlten Walze statt. Anschließend wurde die Folie in 1,6 mm bzw. 2,5 min breite Streifen geschnitten und zu Jumbospulen mit 70.000 lfm bzw. 50.000 lfm Länge verspult.

### Spulendaten:

| | |
|---|---|
| Spulendurchmesser bei 70.000 Ifm und 1,6 mm Breite: | 235 mm |
| Spulengewicht bei 70.000 lfm und 1,6 mm Breite: | 3,3 kg |
| Spulendurchmesser bei 50.000 lfm. und 2,5 mm Breite: | 240 mm |
| Spulengewicht bei 50.000 lfm und 2,5 mm Breite: | 3,6 kg |

### Beispiel B-2

### Simultan gerecktes BOPP ohne Zugabe eines Kohlenwasserstoffharzes

Als Trägerfolie diente eine 19,5 µm dicke, simultan biaxial orientierte PP-Folie ohne Zugabe eines Kohlenwasserstoffharzes. Die Herstellung entsprach ansonsten Beispiel 1.

### E-Modul

- in Längsrichtung 4.503 MPa
- in Querrichtung 2.751 MPa

### Zugfestigkeit,

- in Längsrichtung 319 MPa
- in Querrichtung 207 MPa

### Schlagzugzähigkeit

- in Längsrichtung 6.022,62 kJ/m²
- in Querrichtung 8.151 kJ/m²

Die Messung der Trübung nach ASTM D1003 mit dem Messgerät Haze gard plus Fa. Byk Gardner ergab einen Wert von 0,6 %.

### Spulendaten:

| | |
|---|---|
| Spulendurchmesser bei 70.000 lfm und 1,6 mm Breite: | 234 mm |
| Spulengewicht bei 70.000 lfm und 1,6 mm Breite: | 3,2 kg |
| Spulendurchmesser bei 50.000 lfm. und 2,5 mm Breite: | 239 mm |
| Spulengewicht bei 50.000 lfm und 2,5 mm Breite: | 3,5 kg |

### Beispiel B-3:

### Simultan gerecktes BOPP mit Zugabe eines Kohlenwasserstoffharzes

Als Trägerfolie diente eine 18,5 µm dicke, durch simultane Verstreckung biaxial orientierte PP-Folie mit Zugabe eines Kohlenwasserstoffharzes. Die Herstellung entsprach ansonsten Beispiel 1.

### E-Modul

- in Längsrichtung 5.856 MPa
- in Querrichtung 4.023 MPa

### Zugfestigkeit,

- in Längsrichtung 292 MPa
- in Querrichtung 198 MPa

### Schlagzugzähigkeit

- in Längsrichtung 5.552 kJ/m²
- in Querrichtung 8.143 kJ/m²

Die Messung der Trübung nach ASTM D1003 mit dem Messgerät Haze gard plus Fa. Byk Gardner ergab einen Wert von ca. 2%.

### Spulendaten:

| | |
|---|---|
| Spulendurchmesser bei 70.000 lfm und 1,6 mm Breite: | 231 mm |
| Spulengewicht bei 70.000 lfm und 1,6 mm Breite: | 3,1 kg |
| Spulendurchmesser bei 50.000 lfm. und 2,5 mm Breite: | 237 mm |
| Spulengewicht bei 50.000 lfm und 2,5 mm Breite: | 3,4 kg |

### Vergleichsbeispiel V-1:

### Längsgerecktes MOPP

Als Trägerfolie dient eine 27 µm dicke längsgereckte PP-Folie, die weitere Herstellung ist mit Beispiel 1 identisch.

Für die Beschichtung mit Haftklebstoff musste die Maschine jedoch mit zwei zusätzlichen Breitstreckem ausgerüstet werden, um bei der schlechteren Planlage der Folie die Faltenbildung zu minimieren.

Die Messung des Dickenprofils der 1000 mm breiten, längsgereckten Polypropylen Folie in 27 µm Dicke ergab mittels mechanischer Abtastung in Abständen von 100 mm folgende Werte:
28,5 µm, 27,0 µm, 28,0 µm, 29,0 µm, 28,5 µm, 29.5 µm, 28,0 µm, 27,5 µm, 28 µm, 28 µm
Mittelwert: 28,2 µm
Standardabweichung: 0,715 µm

Längsgerecktes Polypropylen lässt sich nach heutigem Stand der Technik praktisch nicht mit Schichtdicken unterhalb von 27 µm produzieren, da sonst die Dickengleichmäßigkeit zu schlecht wird.

Der Schrumpf der so hergestellten Folie beträgt (gemessen bei 130°C / 5 min)
- in Längsrichtung 9 % und
- in Querrichtung 0 %

### E-Modul

- in Längsrichtung 3.300 MPa
- in Querrichtung 1.200 MPa

### Zugfestigkeit

- in Längsrichtung 366 MPa
- in Querrichtung 20 MPa

### Schlagzugzähigkeit

- in Längsrichtung 3.169 kJ/m²
- in Querrichtung 119 kJ/m²

Die Messung der Trübung nach ASTM D1003 mit dem Messgerät Haze gard plus Fa. Byk Gardner ergab einen Wert von 28,4%.

### Spulendaten,

| | |
|---|---|
| Spulendurchmesser bei 70.000 Ifm und 1,6 mm Breite: | 250 mm |
| Spulengewicht bei 70.000 lfm und 1,6 mm Breite: | 4 kg |
| Spulendurchmesser bei 50.000 lfm und 2,5 mm Breite: | 256 mm |
| Spulengewicht bei 50.000 Um und 2,5 mm Breite: | 4,4 kg |

### Vergleichsbeispiel V-2:

### Sequentiell gerechtes BOPP ohne Harzzugabe

Als Trägerfolie dient eine 20 µm dicke, biaxial orientierte PP-Folie ohne Zugabe eines Kohlenwasserstoffharzes, die weitere Herstellung ist mit Beispiel 1 identisch.

Der Schrumpf der so hergestellten Folie beträgt (gemessen bei 130°C /5 min)
- in Längsrichtung 5,5 % und
- in Querrichtung 3 %

### E-Modul

- in Längsrichtung 1.900 MPa
- in Querrichtung 3.400 MPa

### Zugfestigkeit

- in Längsrichtung 170 MPa
- in Querrichtung 280 MPa

### Schlagzugzähigkeit

- in Längsrichtung 6.983 kJ/m²
- in Querrichtung 4.527 kJ/m²

Die Messung der Trübung nach ASTM D1003 mit dem Messgerät Haze gard plus Fa. Byk Gardner ergab einen Wert von 1,8%.

### Spulendaten:

| | |
|---|---|
| Spulendurchmesser bei 70.000 lfm und 1,6 mm Breite: | nicht verspulbar, wegen Abriss |
| Spulengewicht bei 70.000 lfm und 1,6 mm Breite: | nicht verspulbar, wegen Abriss |
| Spulendurchmesser bei 50.000 lfm und 2,5 mm Breite: | 240 mm |
| Spulengewicht bei 50.000 Um und 2,5 mm Breite: | 3,6 kg |

### Zusammenfassung der experimentellen Daten:

| Eigenschaft | B-1 | B-2 | B-3 | V-1 | V-2 |
|---|---|---|---|---|---|
| Dicke [mm] | 0,0197 | 0,0185 | 0,0195 | 0,028 | 0,02 |
| Trübung der Trägerfolie [%] | 2,5 | 0,6 | ca. 2 | 28,4 | 1,8 |
| Standardabweichung Dickenprofil [µm] | 0,316 | - | - | 0,715 | - |
| E-Modul MD [MPa] | 2.500 | 4.503 | 5.856 | 3.300 | 1.900 |
| E-Modul TD [MPa] | 4.600 | 2.751 | 4.023 | 1.200 | 3.400 |
| Zugfestigkeit MD [MPa] | 220 | 319 | 292 | 366 | 170 |
| Zugfestigkeit TD [MPa] | 270 | 207 | 198 | 20 | 280 |
| Schlagzugzähigkeit MD [kJ/m²] | 7.286 | 6.022 | 5.552 | 3.169 | 6.983 |
| Schlagzugzähigkeit TD [kJ/m²] | 4.913 | 8.151 | 8.143 | 119 | 4.527 |
| Spulengewicht bei 70.000 lfm [kg] | 3,3 | 3,2 | 3,1 | 4 | entfällt |
| Spulendurchmesser bei 70.000 lfm [mm] | 235 | 234 | 231 | 250 | entfällt |
| Schrumpf MD [%] | 14 | - | - | 9 | 5,5 |
| Schrumpf TD [%] | 13 | - | - | 0 | 3,0 |

Die mit BOPP hergestellte Aufreißstreifenspule hat aufgrund der geringeren Dicke des Trägermaterials bei gleicher Fadenlauflänge ein um bis zu 25% geringeres Gewicht, als die mit längsgerecktem Polypropylen als Trägermaterial hergestellte. Dies liegt daran, dass die Herstellung von längsgerecktem Polypropylen in 20 µm Dicke mit der gewünschten Dickengleichmäßigkeit nicht gelingt.

## Patentansprüche

1. Wärmeschrumpffähiger Aufreißstreifen für Verpackungen umfassend
(i) eine biaxial orientierte Trägerfolie mit einer Schichtdicke von höchstens 24 µm, welche auf zumindest einem thermoplastischen Polyolefin oder Olefin-Copolymerisat P₁ basiert,
(ii) eine Haftschicht, welche auf der einen Seite unmittelbar an die Trägerfolie angrenzt, auf einem Haftklebstoff basiert, eine Schichtdicke im Bereich von 3,5 bis 12 µm aufweist und eine der beiden Oberflächenschichten des Aufreißstreifens bildet, und
(iii) eine Deckschicht, welche auf der anderen Seite unmittelbar an die Trägerfolie angrenzt, auf einem silanisierten und/oder fluoridierten Material basiert und die andere der beiden Oberflächenschichten des Aufreißstreifens bildet;
wobei der Elastizitätsmodul des Aufreißstreifens bei Raumtemperatur
- in Längsrichtung mindestens 2.200 MPa und
- in Querrichtung mindestens 1.400 MPa
beträgt, wobei die Bestimmung des Elastizitätsmoduls mit dem Zugversuch angelehnt an ISO 527-2/1B/1 erfolgt und dabei aus den zu prüfenden Mustern in Prüfrichtung 15 mm breite Probestreifen geschnitten werden, die Einspannlänge 50 mm und die Prüfgeschwindigkeit 0,5 mm/min beträgt; und
wobei der Aufreißstreifen bei einer Umgebungstemperatur von 130 °C an Luft und einer Einwirkzeit von 5 Minuten in Längs- und in Querrichtung gleich oder verschieden eine Schrumpffähigkeit von mindestens 8% aufweist.

2. Aufreißstreifen nach Anspruch 1, **dadurch gekennzeichnet, dass** die Schichtdicke der biaxial orientierten Trägerfolie höchstens 22 µm beträgt.

3. Aufreißstreifen nach Anspruch 1 oder 2, **dadurch gekennzeichnet, dass P₁** Polypropylen oder ein Propylen-Copolymerisat ist.

4. Aufreißstreifen nach einem der vorstehenden Ansprüche, **dadurch gekennzeichnet, dass** die biaxial orientierte Trägerfolie auf einer Mischung basiert umfassend
(i) das zumindest eine thermoplastische Polyolefin oder Olefin-Copolymerisat **P₁,** wobei dieses ein gewichtsmittleres Molekulargewicht M_{w} von mindestens 50.000 g mol⁻¹ aufweist, und
(ii) zumindest ein thermoplastisches Polyolefin oder Olefin-Copolymerisat **P₂,** welches ein gewichtsmittleres Molekulargewicht M_{w} von höchstens 25.000 g mol⁻¹ aufweist.

5. Aufreißstreifen nach Anspruch 4, **dadurch** gekenntzeichnet, dass **P₁** und **P₂** aus unterschiedlichen Monomereinheiten aufgebaut sind.

6. Aufreißstreifen nach Anspruch 4 oder 5, **dadurch gekennzeichnet, dass** der Gewichtsanteil von **P₂** im Bereich von 2,5 bis 20 Gew.-% liegt, bezogen auf das Gesamtgewicht der Trägerfolie.

7. Aufreißstreifen nach einem der Ansprüche 4 bis 6, **dadurch gekennzeichnet, dass P₂**
- einen Schmelzpunkt im Bereich von 130 bis 170°C;
- eine Dichte im Bereich von 0,94 bis 1,00 g cm⁻³; und/oder
- einen Schmelzflussindex bei 190°C/2, 16 kg im Bereich von 7,0 bis 15 g 10 min⁻¹: aufweist.

8. Aufreißstreifen nach einem der Ansprüche 4 bis 7, **dadurch gekennzeichnet, dass P₂** ein Kohlenwasserstoffharz ist.

9. Aufreißstreifen nach Anspruch 8, **dadurch gekennzeichnet, dass** das Kohlenwasserstoffharz ausgewählt ist aus der Gruppe bestehend aus Cumaron-Inden-Harz, Petroleumharz, Styrolharz, Dicyclopentadienharz und Terpenharz.

10. Aufreißstreifen nach einem der vorstehenden Ansprüche, **dadurch gekennzeichnet, dass** er transparent ist.

11. Verfahren zur Herstellung eines wärmeschrumpffähigen Aufreißstreifens für Verpackungen definiert wie in einem der Ansprüche 1 bis 10 umfassend das simultane biaxiale Verstrecken der Trägerfolie in Längs- und in Querrichtung.

12. Verwendung eines Aufreißstreifens nach einem der Ansprüche 1 bis 10 zur Herstellung eines Verpackungsmaterials.

13. Wärmeschrumpffähiges, heißsiegelbares Verpackungsmaterial umfassend einen Aufreißstreifen nach einem der Ansprüche 1 bis 10 und eine Einschlagfolie.

14. Verpackungsmaterial nach Anspruch 13, **dadurch gekennzeichnet, dass** der Aufreißstreifen über einen druckempfindlichen Klebstoff mit der Einschlagfolie verbunden ist.

15. Verwendung eines Verpackungsmaterials nach Anspruch 13 oder 14 zur Verpackung eines Verpackungsguts.

## Claims

1. Heat-shrinkable tear strip for packaging encompassing
(i) a biaxially oriented backing foil with a layer thickness of at most 24 µm, which is based on at least one thermoplastic polyolefin or olefin copolymer P₁,
(ii) an adhesive layer, which is immediately adjacent to the backing foil on one side, and is based on a pressure-sensitive adhesive, and has a layer thickness in the range from 3.5 to 12 µm, and forms one of the two surface layers of the tear strip; and
(iii) an outer layer, which is immediately adjacent to the backing film on the other side, and is based on a silanized and/or fluoridated material, and forms the other of the two surface layers of the tear strip;
where the modulus of elasticity of the tear strip at room temperature is
- longitudinally at least 2200 MPa and
- transversely at least 1400 MPa,
where the modulus of elasticity is determined by the tensile test based on ISO 527-2/1B/1 and test strips of width 15 mm are cut in the test direction here from the samples to be tested, the clamped length is 50 mm and the test velocity is 0.5 mm/min; and
where the tear strip has, longitudinally and transversely, an identical or different shrinkability of at least 8% at an ambient temperature of 130°C in air and at an exposure time of 5 minutes.

2. Tear strip according to Claim 1, **characterized in that** the layer thickness of the biaxially oriented backing foil is at most 22 µm.

3. Tear strip according to Claim 1 or 2,
**characterized in that** P₁ is polypropylene or a propylene copolymer.

4. Tear strip according to any of the preceding claims, **characterized in that** the biaxially oriented backing film is based on a mixture encompassing
(i) the at least one thermoplastic polyolefin or olefin copolymer P₁, where this has a weight-average molar mass M_{w} of at least 50 000 g mol⁻¹, and
(ii) at least one thermoplastic polyolefin or olefin copolymer P₂, which has a weight-average molar mass M_{w} of at most 25 000 g mol⁻¹.

5. Tear strip according to Claim 4, **characterized in that** P₁ and P₂ are composed of different monomer units.

6. Tear strip according to Claim 4 or 5,
**characterized in that** the proportion by weight of P₂ is in the range from 2.5 to 20% by weight, based on the total weight of the backing foil.

7. Tear strip according to any of Claims 4 to 6, **characterized in that** P₂ has
- a melting point in the range from 130 to 170°C;
- a density in the range from 0.94 to 1.00 g cm⁻³ and/or
- a melt flow index in the range from 7.0 to 15 g 10 min⁻¹ for 190°C/2.16 kg.

8. Tear strip according to any of Claims 4 to 7, **characterized in that** P₂ is a hydrocarbon resin.

9. Tear strip according to Claim 8, **characterized in that** the hydrocarbon resin has been selected from the group consisting of cumarone-indene resin, petroleum resin, styrene resin, dicyclopentadiene resin and terpene resin.

10. Tear strip according to any of the preceding claims, **characterized in that** it is transparent.

11. Process for the production of a heat-shrinkable tear strip for packaging defined as in any of Claims 1 to 10, encompassing the simultaneous longitudinal and transverse biaxial orientation of the backing foil.

12. Use of a tear strip according to any of Claims 1 to 10 for the production of a packaging material.

13. Heat-shrinkable, heat-sealable packaging material, encompassing a tear strip according to any of Claims 1 to 10 and a wrapping foil.

14. Packaging material according to Claim 13,
**characterized in that** the tear strip has been bonded to the wrapping foil by way of a pressure-sensitive adhesive.

15. Use of a packaging material according to Claim 13 or 14 for the packaging of an item requiring packaging.

## Revendications

1. Bande de déchirage rétractable à chaud pour emballages, comprenant
(i) un film de support orienté biaxialement, ayant une épaisseur de couche d'au maximum 24 µm, qui est à base d'au moins une polyoléfine thermoplastique ou un copolymère d'oléfine **P₁** thermoplastique,
(ii) d'une couche adhésive qui sur une face est directement adjacente au film de support, est à base d'un autoadhésif, présente une épaisseur de couche dans la plage de 3,5 à 12 µm et constitue l'une des deux couches superficielles de la bande de déchirage ; et
(iii) une couche de recouvrement qui sur l'autre face est directement adjacente au film de support, est à base d'un matériau silané et/ou fluoré et constitue l'autre des deux couches superficielles de la bande de déchirage ;
le module d'élasticité de la bande de déchirage étant, à la température ambiante,
- d'au moins 2 200 MPa dans le sens longitudinal et
- d'au moins 1 400 MPa dans le sens transversal, la détermination du module d'élasticité s'effectuant avec l'essai de traction basé sur ISO 527-2/1B/1 et des bandes éprouvettes de 15 mm de largeur étant à cet effet découpées dans le sens de l'essai dans l'échantillon à tester, la longueur libre entre mâchoires étant de 50 mm et la vitesse de l'essai étant de 0,5 mm/min ; et
la bande de déchirage présentant à une température de l'environnement de 130 °C à l'air et en un temps d'action de 5 minutes une rétractabilité, égale ou différente dans le sens longitudinal et dans le sens transversal, d'au moins 8 %.

2. Bande de déchirage selon la revendication 1, **caractérisée en ce que** l'épaisseur de couche du film de support orienté biaxialement est de 22 µm au maximum.

3. Bande de déchirage selon la revendication 1 ou 2, **caractérisée en ce que P₁** est un polypropylène ou un copolymère de propylène.

4. Bande de déchirage selon l'une quelconque des revendications précédentes, **caractérisée en ce que** le film de support orienté biaxialement est à base d'un mélange comprenant
(i) ladite au moins une polyoléfine thermoplastique ou ledit au moins un copolymère d'oléfine thermoplastique **P₁,** présentant une masse moléculaire moyenne en poids M_{w} d'au moins 50 000 g.mole⁻¹, et
(ii) au moins une polyoléfine thermoplastique ou un copolymère d'oléfine thermoplastique **P₂**, qui présente une masse moléculaire moyenne en poids Mw de 25 000 g mole⁻¹ au maximum.

5. Bande de déchirage selon la revendication 4, **caractérisée en ce que P₁** et **P₂** sont constitués de motifs monomères différents.

6. Bande de déchirage selon la revendication 4 ou 5, **caractérisée en ce que** la proportion pondérale de **P₂** se situe dans la plage allant de 2,5 à 20 % en poids, par rapport au poids total du film de support.

7. Bande de déchirage selon l'une quelconque des revendications 4 à 6, **caractérisée en ce que P₂** présente
- un point de fusion dans la plage de 130 à 170°C ;
- une densité dans la plage de 0,94 à 1,00 g.cm⁻³ ; et/ou
- un indice de fluidité à chaud à 190 °C/2,16 kg dans la plage de 7,0 à 15 g.10 min⁻¹.

8. Bande de déchirage selon l'une quelconque des revendications 4 à 7, **caractérisée en ce que P₂** est une résine hydrocarbonée.

9. Bande de déchirage selon la revendication 8, **caractérisée en ce que** la résine hydrocarbonée est choisie dans le groupe constitué par une résine coumarone-indène, une résine de pétrole, une résine de styrène, une résine de dicyclopentadiène et une résine terpénique.

10. Bande de déchirage selon l'une quelconque des revendications précédentes, **caractérisée en ce qu'**elle est transparente.

11. Procédé pour la fabrication d'une bande de déchirage rétractable à chaud pour emballages, telle que définie dans l'une quelconque des revendications 1 à 10, comprenant l'étirage biaxial simultané du film de support dans le sens longitudinal et dans le sens transversal.

12. Utilisation d'une bande de déchirage selon l'une quelconque des revendications 1 à 10, pour la fabrication d'un matériau d'emballage.

13. Matériau d'emballage thermosoudable, rétractable à chaud, comprenant une bande de déchirage selon l'une quelconque des revendications 1 à 10 et un film d'enveloppe.

14. Matériau d'emballage selon la revendication 13, **caractérisé en ce que** la bande de déchirage est assemblée avec le film d'enveloppe au moyen d'un adhésif sensible à la pression.

15. Utilisation d'un matériau d'emballage selon la revendication 13 ou 14, pour l'emballage d'une marchandise à présenter en emballage.
